# EUROPEAN PATENT SPECIFICATION

(11) **EP 2 785 452 B1**
(45) Date of publication and mention of the grant of the patent: **01.11.2023**
(21) Application number: 12795840.3
(22) Date of filing: 30.11.2012
(51) Int. Cl.: B01J 29/76, B01J 29/72, B01J 29/74, B01J 29/78, B01D 53/94, B01J 37/02, B01D 53/86, B01J 29/85

(54) **CATALYST FOR TREATING EXHAUST GAS**
ABGASKATALYSATOR
CATALYSEUR DE DÉPOLLUTION

(30) Priority: 01.12.2011 US 201161565774 P
(43) Date of publication of application: 08.10.2014
(73) Proprietor: Johnson Matthey Public Limited Company, London EC4A 4AB (GB)
(72) Inventor: CHANDLER, Guy Richard, Little Eversden Cambridge CB23 1HB (GB); GREEN, Alexander Nicholas Michael, Royston Hertfordshire SG7 5AL (GB); PHILLIPS, Paul Richard, Royston Hertfordshire SG8 5YR (GB); REID, Stuart David, Cambourne Cambridgeshire CB23 5JA (GB)
(74) Representative: Bown, Mark Richard
(86) International application number: PCT/GB2012/052957
(87) International publication number: WO 2013/079954

(56) References cited:
- EP-A1- 0 415 410
- WO-A1-00/72965
- WO-A1-2008/085265
- WO-A1-2012/075400
- WO-A2-2011/064666
- JP-A- 2000 061 312
- DUSTIN W FICKEL ET AL: "The ammonia selective catalytic reduction activity of copper-exchanged small-pore zeolites", APPLIED CATALYSIS B: ENVIRONMENTAL, ELSEVIER, AMSTERDAM, NL, vol. 102, no. 3, 9 December 2010 (2010-12-09), pages 441-448, XP028139896, ISSN: 0926-3373, DOI: 10.1016/J.APCATB.2010.12.022 [retrieved on 2010-12-16]

## Description

### BACKGROUND

### 1. Field of Invention

The present invention relates to catalysts, and methods for treating combustion exhaust gas, selective catalytic reduction (SCR) of NOₓ in lean-burn combustion exhaust gas.

### 2. Description of Related Art

The largest portions of most combustion exhaust gases contain relatively benign nitrogen (N₂), water vapor (H₂O), and carbon dioxide (CO₂); but the exhaust gas also contains in relatively small part noxious and/or toxic substances, such as carbon monoxide (CO) from incomplete combustion, hydrocarbons (HC) from un-burnt fuel, nitrogen oxides (NOₓ) from excessive combustion temperatures, and particulate matter (mostly soot). To mitigate the environmental impact of exhaust gas released into the atmosphere, it is desirable to eliminate or reduce the amount of these undesirable components, preferably by a process that, in turn, does not generate other noxious or toxic substances.

One of the most burdensome components to remove from a vehicular exhaust gas is NOₓ, which includes nitric oxide (NO), nitrogen dioxide (NO₂), and nitrous oxide (N₂O). The reduction of NOₓ to N₂ in a lean burn exhaust gas, such as that created by diesel engines, is particularly problematic because the exhaust gas contains enough oxygen to favor oxidative reactions instead of reduction. NOₓ can be reduced in a diesel exhaust gas, however, by a process commonly known as Selective Catalytic Reduction (SCR). An SCR process involves the conversion of NOₓ, in the presence of a catalyst and with the aid of a reducing agent, into elemental nitrogen (N₂) and water. In an SCR process, a gaseous reductant such as ammonia is added to an exhaust gas stream prior to contacting the exhaust gas with the SCR catalyst. The reductant is absorbed onto the catalyst and the NO*ₓ* reduction reaction takes place as the gases pass through or over the catalyzed substrate. The chemical equation for stoichiometric SCR reactions using ammonia is:

4NO + 4NH₃ + 3O₂ → 4N₂ + 6H₂O

2NO₂ + 4NH₃ + 3O₂ → 3N₂ + 6H₂O

NO + NO₂ + 2NH₃ → 2N₂ + 3H₂O

Known SCR catalysts include zeolites and other molecular sieves. Molecular sieves are microporous crystalline solids with well-defined structures and generally contain silicon, aluminum and oxygen in their framework and can also contain cations within their pores. A defining feature of a molecular sieve is its crystalline or pseudo-crystalline structure which is formed by molecular tetrahedral cells interconnected in a regular and/or repeating manner to form a framework. Unique zeolite frameworks are commonly recognized by a three-letter code assigned by the International Zeolite Association (IZA) Structure Commission. Examples of molecular sieves frameworks that are known SCR catalysts include Framework Type Codes CHA (chabazite), BEA (beta), and MOR (mordenite).

Some molecular sieves have a three-dimensional molecular framework that arises from a series of interconnected cells. The cells of these molecular sieves typically have volumes on the order of a few cubic nanometers and cell openings (also referred to as "pores" or "apertures") on the order of a few angstroms in diameter. The cells can be defined by the ring size of their pores, where, for example, the term "a-ring" refers to a closed loop that is built from a tetrahedrally coordinated silicon (or aluminum) atoms and 8 oxygen atoms. In certain zeolites, the cell pores are aligned within the framework to create one or more channels which extend through the framework, thus creating a mechanism to restrict the ingress or passage of different molecular or ionic species through the molecular sieve, based on the relative sizes of the channels and molecular or ionic species. The size and shape of molecular sieves affect their catalytic activity in part because they exert a steric influence on the reactants, controlling the access of reactants and products. For example, small molecules, such as NOx, can typically pass into and out of the cells and/or can diffuse through the channels of a small-pore molecular sieve (i.e., those having framework with a maximum ring size of eight tetrahedral atoms), whereas larger molecules, such as long chain hydrocarbons, cannot. Moreover, partial or total dehydration of a molecular sieve can results in a crystal structure interlaced with channels of molecular dimensions.

Zeolites having a small pore framework, i.e., containing a maximum ring size of 8, have been found to be particularly useful in SCR applications. Small pore zeolites include those having the following crystalline structure types: CHA, LEV, ERI, and AEI (as defined by International Zeolite Association). Specific aluminosilicates and silico-aluminophosphates examples of molecular sieves having the CHA framework include SAPO-34, AIPO-34, SSZ-13, and SSZ-62.

Zeolite is an aluminosilicate having a crystalline framework of interconnected alumina and silica, in particular, cross-linked alumina and silica via a sharing of oxygen atoms, and thus can be characterized by its silica-to-alumina ratio (SAR). In general, higher SARs are associated with improved hydrothermal stability. The temperature of an exhaust gas exiting a mobile lean-burn engine, such as a diesel engine, is often 500 to 650 °C or higher. The exhaust gas typically contains water vapor as well. Therefore, hydrothermal stability is an important consideration in designing an SCR catalyst.

While zeolites *per* se often have catalytic properties, their catalytic performance may be improved in certain environments by a cationic exchange wherein a portion of ionic species existing on the surface or within the framework is replaced by transition metal cations, such Cu²⁺. That is, a zeolite's SCR performance can be promoted by loosely holding one or more transition metal ions, such as copper or iron, to the molecular sieve's

The scientific article DUSTIN W FICKEL ET AL: "The ammonia selective catalytic reduction activity of copper-exchanged small-pore zeolites", APPLIED CATALYSIS B: ENVIRONMENTAL, ELSEVIER, vol. 102, no. 3, 9 December 2010, pages 441-448, discusses performance and hydrothermal stability of various copper-exchanged zeolites, including zeolite SSZ-13 having various SAR and copper loadings.

For transition metal exchanged SCR catalysts, it is desirable to have high catalytic activity at low operating temperatures. At operating temperatures below 400 °C, higher metal loading results in higher catalytic activity. The achievable metal loading is often dependent on the quantity of exchange sites in the in the molecular sieve. In general, molecular sieves with low SAR allow for the highest metal loadings, thus leading to a conflict between the need for high catalytic activity and high hydrothermal stability which is achieved by a relatively higher SAR value. Moreover, high copper-loaded catalysts do not perform as well at high temperatures (e.g., > 450 °C). For example, loading an aluminosilicate having a CHA framework with large amounts of copper (i.e., copper-to-aluminum atomic ratio of > 0.25) can result in significant NH₃ oxidation at temperatures over 450 °C, resulting in low selectivity to N₂. This shortcoming is particularly acute under filter regeneration conditions which involve exposing the catalyst to temperatures above 650 °C.

Another important consideration in designing an SCR catalyst for mobile application is the performance consistency of the catalyst. For example, it is desirable for a fresh catalyst to produce a similar level of NOx conversion to the same catalyst after it has aged.

Accordingly, there remains a need for SCR catalysts that offer improved performance over existing SCR materials.

### SUMMARY OF THE INVENTION

Applicants have discovered that high concentrations cerium can be incorporated into certain copper promoted, low SAR zeolite SSZ-13 to improve the material's hydrothermal stability, low temperature catalytic performance, and/or consistency in catalytic performance between the fresh and aged states of the catalyst. For example, certain embodiments of the invention utilize the surprising discovery that the addition of Ce at high concentrations to a fully formulated copper-promoted low SAR SSZ-13 aluminosilicate improves the catalyst's hydrothermal durability compared to similar metal-promoted, low SAR aluminosilicates without Ce. Also surprising is the fact that this improved performance is not produced when similar amounts of Ce are added to a similar aluminosilicate having a higher SAR and promotion metal concentration or to silico-aluminophosphates of the same framework type.

Accordingly, an aspect of the present invention is a catalyst composition as defined in appended claim 1. Preferred embodiments are defined in the appended dependent claims.

According to another aspect of the invention, provided is a method for treating NOx as defined in appended claim 6.

### BRIEF DESCRIPTION OF THE FIGURE

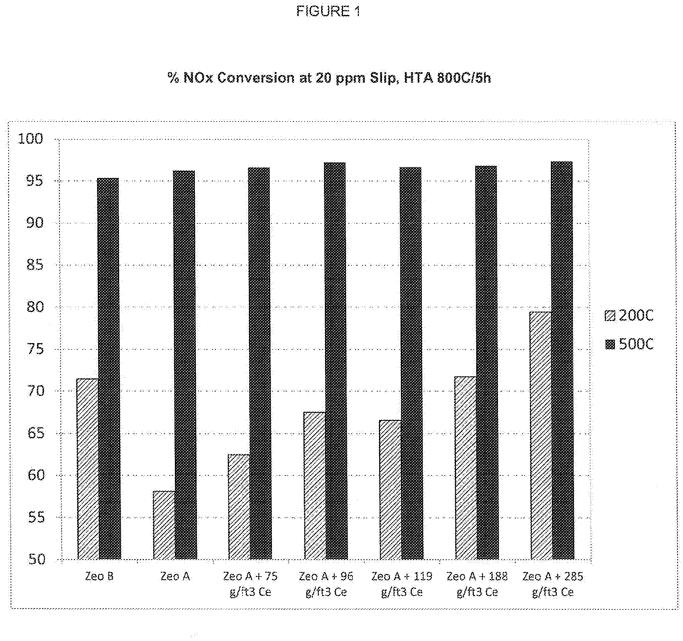

Figure 1 is a bar graph showing data on NOx conversion of various catalysts of the invention and also comparative examples of other catalyst material.

### DETAILED DESCRIPTION OF PREFERRED EMBODIMENTS OF THE INVENTION

In a preferred embodiment, the invention is directed to a catalyst for improving environmental air quality, particularly for improving exhaust gas emissions generated by diesel and other lean burn engines. Exhaust gas emissions are improved, at least in part, by reducing NOₓ and/or NH₃ slip concentrations lean burn exhaust gas over a broad operational temperature range. Useful catalysts are those that selectively reduce NOₓ and/or oxidize ammonia in an oxidative environment (i.e., an SCR catalyst and/or AMOX catalyst). Catalysts include copper-exchanged, SSZ-13 zeolite having a silica to alumina mole ratio (SAR) of 15 to 20 and an amount of exchanged copper of 1.5 to 5 wt%, based on the total weight of the zeolite, and containing 1.35 to 13.5 weight percent of cerium, based on the total weight of the zeolite, wherein the cerium is present in a form selected from exchanged cerium ions, monomeric ceria, oligomeric ceria, and combinations thereof, provided that said oligomeric ceria has a particle size of less than 5 µm.

Zeolites for use in the present application are synthetic zeolites because synthetic zeolites can have a more uniform silica-to-alumina ratio (SAR), crystallite size, crystallite morphology, and the absence of impurities (e.g. alkaline earth metals). The zeolite has synthetic CHA structure. The specific zeolite having the CHA structure used in the present invention is SSZ-13 Said zeolite has a non-phosphorous CHA crystal structure, i.e., does not have an appreciable amount of phosphorous in their framework. As used herein, the term "non-phosphorous CHA crystal structure" means frameworks which do not have a phosphorous as a regular repeating unit and/or do not have an amount of phosphorous that would affect the basic physical and/or chemical properties of the material, particularly with respect to the material's capacity to selectively reduce NOx over a broad temperature range. Accordingly, non-phosphorous CHA crystal structure may include crystalline structures having a de minimus amount of phosphorous.

Zeolites with application in the present invention can include those that have been treated to improve hydrothermal stability. Conventional methods of improving hydrothermal stability include: (i) dealumination by steaming and acid extraction using an acid or complexing agent e.g. (EDTA-ethylenediaminetetracetic acid); treatment with acid and/or complexing agent; treatment with a gaseous stream of SiCl₄ (replaces Al in the zeolite framework with Si); and (ii) cation exchange--use of multi-valent cations such as lanthanum (La).

The zeolite has a mole silica to alumina ratio (SAR) of 15 to 20.

The silica-to-alumina ratio of zeolites may be determined by conventional analysis. This ratio is meant to represent, as closely as possible, the ratio in the rigid atomic framework of the zeolite crystal and to exclude silicon or aluminum in the binder or in cationic or other form within the channels. Since it may be difficult to directly measure the silica to alumina ratio of zeolite after it has been combined with a binder material, particularly an alumina binder, these silica-to-alumina ratios are expressed in terms of the SAR of the zeolite per se, i.e., prior to the combination of the zeolite with the other catalyst components.

In preferred embodiments, the catalyst composition comprises molecular sieve crystals having a mean crystal size of greater than about 0.5 µm, preferably between about 0.5 and about 15 µm, such as about 0.5 to about 5 µm, about 0.7 to about 5 µm, about 1 to about 5 µm, about 1.5 to about 5.0 µm, about 1.5 to about 4.0 µm, about 2 to about 5 µm, or about 1 µm to about 10 µm. The crystals in the catalyst composition can be individual crystals, agglomeration of crystals, or a combination of both, provided that agglomeration of crystals have a mean particle size of less than about 15 µm, preferably less than about 10 µm, and more preferably less than about 5 µm. The lower limit on the mean particle size of the agglomeration is the composition's mean individual crystal size.

Crystal size (also referred to herein as the crystal diameter) is the length of one edge of a face of the crystal. For example, the morphology of chabazite crystals is characterized by rhombohedral (but approximately cubic) faces wherein each edge of the face is approximately the same length. Direct measurement of the crystal size can be performed using microscopy methods, such as SEM and TEM. For example, measurement by SEM involves examining the morphology of materials at high magnifications (typically 1000× to 10,000×). The SEM method can be performed by distributing a representative portion of the zeolite powder on a suitable mount such that individual particles are reasonably evenly spread out across the field of view at 1000× to 10,000× magnification. From this population, a statistically significant sample of random individual crystals (e.g.,50 - 200) are examined and the longest dimensions of the individual crystals parallel to the horizontal line of the straight edge are measured and recorded. (Particles that are clearly large polycrystalline aggregates should not be included the measurements.) Based on these measurements, the arithmetic mean of the sample crystal sizes is calculated.

Particle size of an agglomeration of crystals can be determined in a similar manner except that instead of measuring the edge of a face of an individual crystal, the length of the longest side of an agglomeration is measured. Other techniques for determining mean particle size, such as laser diffraction and scattering can also be used.

As used herein, the term "mean" with respect to crystal or particle size is intended to represent the arithmetic mean of a statistically significant sample of the population. For example, a catalyst comprising molecular sieve crystals having a mean crystal size of about 0.5 to about 5.0 µm is catalyst having a population of the molecular sieve crystals, wherein a statistically significant sample of the population (e.g., 50 crystals) would produce an arithmetic mean within the range of about 0.5 to about 5.0 µm.

In addition to the mean crystal size, catalyst compositions preferably have a majority of the crystal sizes are greater than about 0.5 µm, preferably between about 0.5 and about 15 µm, such as about 0.5 to about 5 µm, about 0.7 to about 5 µm, about 1 to about 5 µm, about 1.5 to about 5.0 µm, about 1.5 to about 4.0 µm, about 2 to about 5 µm, or about 1 µm to about 10 µm. Preferably, the first and third quartile of the sample of crystals sizes is greater than about 0.5 µm, preferably between about 0.5 and about 15 µm, such as about 0.5 to about 5 µm, about 0.7 to about 5 µm, about 1 to about 5 µm, about 1.5 to about 5.0 µm, about 1.5 to about 4.0 µm, about 2 to about 5 µm, or about 1 µm to about 10 µm.

As used herein, the term "first quartile" means the value below which one quarter of the elements are located. For example, the first quartile of a sample of forty crystal sizes is the size of the tenth crystal when the forty crystal sizes are arranged in order from smallest to largest. Similarly, the term "third quartile" means that value below which three quarters of the elements are located. Large crystal CHA zeolites, such as the isotype SSZ-13, can be synthesized by known processes, such as those described in WO 2010/043981 (which is incorporated herein by reference) and WO 2010/074040 (which is incorporated herein by reference).

The catalyst composition comprises, in addition to cerium, at least one extra-framework metal to improve the catalytic performance and/or thermal stability of the material. As used herein, an "extra-framework metal" is one that resides within the molecular sieve and/or on at least a portion of the molecular sieve surface, does not include aluminum, and does not include atoms constituting the framework of the molecular sieve. The extra-framework metal is added to the molecular sieve via on exchange. In one embodiment, at least one extra-framework metal is used conjunction with the molecular sieve to increase the catalyst's performance.

The promoter is copper. The promoter metal loading is 1.5 to 5 wt %, such as 2 to 5 wt%, in terms of exchanged copper, based on the total weight of the zeolite. In certain embodiments, the promoter metal (M), i.e. copper, is present in the aluminosilicate zeolite in an amount to produce a M:Al atomic ratio of 0.17 to 0.24, preferably 0.22 to 0.24, particularly when the aluminosilicate zeolite has an SAR of about 15 to about 20. In certain embodiments that included exchanged copper, the copper is present in an amount from about 80 to about 120 g/ft³ of zeolite, including for example about 86 to about 94 g/ft³, or about 92 to about 94 g/ft³.

In one example, a metal-exchanged molecular sieve is created by blending the molecular sieve into a solution containing soluble precursors of the catalytically active metal. The pH of the solution may be adjusted to induce precipitation of the catalytically active cations onto or within the molecular sieve structure. For example, in a preferred embodiment the zeolite SSZ-13 is immersed in a solution containing copper nitrate for a time sufficient to allow incorporation of the catalytically active copper cations into the molecular sieve structure by ion exchange. Unexchanged copper ions are precipitated out. Depending on the application, a portion of the unexchanged ions can remain in the molecular sieve material as free copper. The metal-substituted molecular sieve may then be washed, dried and calcined.

Generally, ion exchange of the catalytic metal cation into or on the molecular sieve may be carried out at room temperature or at a temperature up to about 80° C over a period of about 1 to 24 hours at a pH of about 7. The resulting catalytic molecular sieve material is preferably dried at about 100 to 120° overnight and calcined at a temperature of at least about 550° C.

Preferably, the molecular sieve catalyst is embodied in the substrate in an amount sufficient to reduce the NOₓ contained in an exhaust gas stream flowing through the substrate. In certain embodiments, at least a portion of the substrate may also contain an oxidation catalyst, such as a platinum group metal (e.g. platinum), to oxidize ammonia in the exhaust gas stream or perform other functions such as conversion of CO into CO₂.

Metal promoted zeolite catalysts of the present invention contain a relatively large amount of Ce and have surprisingly good performance. In particular, a zeolite, which is a CHA aluminosilicate, having an SAR of 15 to 20, that is promoted with a metal, i.e. copper and preferably in a copper:aluminum ratio of about 0.17 to about 0.24, and that also has a Ce concentration of 1.35 to 13.5 weight percent, based on the total weight of the zeolite, is more durable compared to a structurally similar catalysts, such as other CHA zeolites having a higher SAR, or silico-aluminophosphates having a CHA, particularly those with higher loadings of promoter metals.

The cerium concentration in the catalyst material is at least 1.35 weight percent, based on the total weight of the zeolite. In particular, the amount of cerium is 1.35 to 3.5 weight percent, such as 2.7 to 13.5 weight percent, 2.7 to 8.1 weight percent, 2 to 4 weight percent, 2 to 9.5 weight percent, and 5 to 9.5 weight percent, based on the total weight of the zeolite. For most of these ranges, the improvement in catalyst performance correlates directly to the concentration of Ce in the catalyst. These ranges are particularly preferred for copper promoted aluminosilicates having a CHA framework, namely SSZ-13, with an SAR of 15 to 20, such as 16 to 18, and more preferably for such embodiments, wherein the copper is present in a copper-to-aluminum ratio of about 0.17 to about 0.24.

In certain embodiments, the cerium concentration in the catalyst material is about 50 to about 550 g /ft³. Other ranges of Ce include: above 100 g /ft³, above 200 g /ft³, above 300 g /ft³, above 400 g /ft³, above 500 g /ft³, from about 75 to about 350 g /ft³, from about 100 to about 300 g /ft³, and from about 100 to about 250 g /ft³.

In certain embodiments, the concentration of Ce exceeds the theoretical maximum amount available for exchange on the metal-promoted zeolite. Accordingly, in some embodiments, Ce is present in more than one form, such as Ce ions, monomeric ceria, oligomeric ceria, and combinations thereof, provided that said oligomeric ceria has a mean crystal size of less than 5 µm, for example less than 1 µm, about 10 nm to about 1 µm, about 100 nm to about 1 µm, about 500 nm to about 1 µm, about 10 to about 500 nm, about 100 to about 500 nm, and about 10 to about 100 nm. As used herein, the term "monomeric ceria" means CeO₂ as individual molecules or moieties residing freely on and/or in the zeolite or weakly bonded to the zeolite. As used herein, the term "oligomeric ceria" means nanocrystalline CeO₂ residing freely on and/or in the zeolite or weakly bonded to the zeolite.

For embodiments in which the catalyst is part of a washcoat composition, the washcoat may further comprise binder containing Ce or ceria. For such embodiments, the Ce containing particles in the binder are significantly larger than the Ce containing particles in the catalyst.

Cerium is preferably incorporated into a zeolite containing a promoting metal. For example, in a preferred embodiment, an aluminosilicate having a CHA framework undergoes a copper exchange process prior to being impregnated by Ce. An exemplary Ce impregnation process involves adding Ce nitrate to a copper promoted zeolite via a conventional incipient wetness technique.

The zeolite catalyst for use in the present invention can be in the form of a washcoat, preferably a washcoat that is suitable for coating a substrate, such as a metal or ceramic flow through monolith substrate or a filtering substrate, including for example a wall-flow filter or sintered metal or partial filter. Accordingly, provided herein is a washcoat comprising a catalyst component as described herein. In addition the catalyst component, washcoat compositions can further comprise a binder selected from the group consisting of alumina, silica, (non zeolite) silica-alumina, naturally occurring clays, TiO₂, ZrO₂, and SnO₂.

Preferred substrates for use in mobile application are monoliths having a so-called honeycomb geometry which comprises a plurality of adjacent, parallel channels, each channel typically having a square cross-sectional area. The honeycomb shape provides a large catalytic surface with minimal overall size and pressure drop. The zeolite catalyst can be deposited on a flow-through monolith substrate (e.g., a honeycomb monolithic catalyst support structure with many small, parallel channels running axially through the entire part) or filter monolith substrate such as a wall-flow filter, etc. In another embodiment, the zeolite catalyst is formed into an extruded-type catalyst. Preferably, the zeolite catalyst is coated on a substrate in an amount sufficient to reduce the NOx contained in an exhaust gas stream flowing through the substrate. In certain embodiments, at least a portion of the substrate may also contain a platinum group metal, such as platinum (Pt), to oxidize ammonia in the exhaust gas stream.

The zeolites for use in the present invention also can be synthesized directly onto the substrate.

The zeolite catalysts according to the invention also can be formed into an extruded-type flow through catalyst.

The catalytic zeolites described herein can promote the reaction of a reductant, preferably ammonia, with nitrogen oxides to selectively form elemental nitrogen (N₂) and water (H₂O) vis-à-vis the competing reaction of oxygen and ammonia. In one embodiment, the catalyst can be formulated to favor the reduction of nitrogen oxides with ammonia (i.e., and SCR catalyst). In another embodiment, the catalyst can be formulated to favor the oxidation of ammonia with oxygen (i.e., an ammonia oxidation (AMOX) catalyst). In yet another embodiment, an SCR catalyst and an AMOX catalyst are used in series, wherein both catalyst comprise the metal containing zeolite described herein, and wherein the SCR catalyst is upstream of the AMOX catalyst. In certain embodiments, the AMOX catalyst is disposed as a top layer on an oxidative under-layer, wherein the under-layer comprises a platinum group metal (PGM) catalyst or a non-PGM catalyst. Preferably, the AMOX catalyst is disposed on a high surface area support, including but not limited to alumina. In certain embodiments, the AMOX catalyst is applied to a substrate, preferably substrates that are designed to provide large contact surface with minimal backpressure, such as flow-through metallic or cordierite honeycombs. For example, a preferred substrate has between about 25 and about 300 cells per square inch (CPSI) to ensure low backpressure. Achieving low backpressure is particularly important to minimize the AMOX catalyst's effect on the low-pressure EGR performance. The AMOX catalyst can be applied to the substrate as a washcoat, preferably to achieve a loading of about 0.3 to 2.3 g/in³. To provide further NOₓ conversion, the front part of the substrate can be coated with just SCR coating, and the rear coated with SCR and an NH₃ oxidation catalyst which can further include Pt or Pt/Pd on an alumina support.

The reductant (also known as a reducing agent) for SCR processes broadly means any compound that promotes the reduction of NOx in an exhaust gas. Examples of reductants useful in the present invention include ammonia, hydrazine or any suitable ammonia precursor, such as urea ((NH₂)₂CO), ammonium carbonate, ammonium carbamate, ammonium hydrogen carbonate or ammonium formate, and hydrocarbons such as diesel fuel, and the like. Particularly preferred reductant, are nitrogen based, with ammonia being particularly preferred.

In another embodiment, all or at least a portion of the nitrogen-based reductant, particularly NH₃, can be supplied by a NO_{X} adsorber catalyst (NAC), a lean NO_{X} trap (LNT), or a NO_{X} storage/reduction catalyst (NSRC), disposed upstream of the dual function catalytic filter. One of the functions of the NAC in the present invention is to provide a source of NH₃ for the downstream SCR reaction. Accordingly, the NAC is configured in the system in a manner similar to that of the injector - i.e., upstream of the dual function catalytic filter and preferably with no intervening SCR or other catalytic components between the NAC and the filter. NAC components useful in the present invention include a catalyst combination of a basic material (such as alkali metal, alkaline earth metal or a rare earth metal, including oxides of alkali metals, oxides of alkaline earth metals, and combinations thereof), and a precious metal (such as platinum), and optionally a reduction catalyst component, such as rhodium. Specific types of basic material useful in the NAC include cesium oxide, potassium oxide, magnesium oxide, sodium oxide, calcium oxide, strontium oxide, barium oxide, and combinations thereof. The precious metal is preferably present at about 10 to about 200 g/ft³, such as 20 to 60 g/ft³. Alternatively, the precious metal of the catalyst is characterized by the average concentration which may be from about 40 to about 100 grams/ft³.

Under certain conditions, during the periodically rich regeneration events, NH₃ may be generated over a NOₓ adsorber catalyst. The SCR catalyst downstream of the NOₓ adsorber catalyst may improve the overall system NOₓ reduction efficiency. In the combined system, the SCR catalyst is capable of storing the released NH₃ from the NAC catalyst during rich regeneration events and utilizes the stored NH₃ to selectively reduce some or all of the NOₓ that slips through the NAC catalyst during the normal lean operation conditions.

According to another aspect of the invention, provided is a method for the reduction of NOx compounds or oxidation of NH₃ in a gas, which comprises contacting the gas with a catalyst composition described herein for the catalytic reduction of NOₓ compounds for a time sufficient to reduce the level of NOₓ compounds in the gas, as defined in claim 6.

In one embodiment, nitrogen oxides are reduced with the reducing agent at a temperature of at least 100 °C. In another embodiment, the nitrogen oxides are reduced with the reducing agent at a temperature from about 150 °C to 750 °C. In a particular embodiment, the temperature range is from 175 to 550 °C. In another embodiment, the temperature range is from 175 to 400 °C. In yet another embodiment, the temperature range is 450 to 900 °C, preferably 500 to 750 °C, 500 to 650 °C, 450 to 550 °C, or 650 to 850 °C. Embodiments utilizing temperatures greater than 450 °C are particularly useful for treating exhaust gases from a heavy and light duty diesel engine that is equipped with an exhaust system comprising (optionally catalyzed) diesel particulate filters which are regenerated actively, e.g. by injecting hydrocarbon into the exhaust system upstream of the filter, wherein the zeolite catalyst for use in the present invention is located downstream of the filter. In other embodiments, the zeolite SCR catalyst is incorporated on a filter substrate. Methods of the present invention may comprise one or more of the following steps: (a) accumulating and/or combusting soot that is in contact with the inlet of a catalytic filter; (b) introducing a nitrogenous reducing agent into the exhaust gas stream prior to contacting the catalytic filter, preferably with no intervening catalytic steps involving the treatment of NOₓ and the reductant; (c) generating NH₃ over a NOₓ adsorber catalyst, and preferably using such NH₃ as a reductant in a downstream SCR reaction; (d) contacting the exhaust gas stream with a DOC to oxidize hydrocarbon based soluble organic fraction (SOF) and/or carbon monoxide into CO₂, and/or oxidize NO into NO₂, which in turn, may be used to oxidize particulate matter in particulate filter; and/or reduce the particulate matter (PM) in the exhaust gas; (e) contacting the exhaust gas with one or more flow-through SCR catalyst device(s) in the presence of a reducing agent to reduce the NOx concentration in the exhaust gas; and (f) contacting the exhaust gas with an AMOX catalyst, preferably downstream of the SCR catalyst to oxidize most, if not all, of the ammonia prior to emitting the exhaust gas into the atmosphere or passing the exhaust gas through a recirculation loop prior to exhaust gas entering/reentering the engine.

The method can be performed on a gas derived from a combustion process, such as from an internal combustion engine (whether mobile or stationary), a gas turbine and coal or oil fired power plants. The method may also be used to treat gas from industrial processes such as refining, from refinery heaters and boilers, furnaces, the chemical processing industry, coke ovens, municipal waste plants and incinerators, etc. In a particular embodiment, the method is used for treating exhaust gas from a vehicular lean burn internal combustion engine, such as a diesel engine, a lean-burn gasoline engine or an engine powered by liquid petroleum gas or natural gas.

Described herein is an exhaust system for a vehicular lean burn internal combustion engine, which system comprising a conduit for carrying a flowing exhaust gas, a source of nitrogenous reductant, a zeolite catalyst described herein. The system can include means, when in use, for controlling the metering means so that nitrogenous reductant is metered into the flowing exhaust gas only when it is determined that the zeolite catalyst is capable of catalyzing NOₓ reduction at or above a desired efficiency, such as at above 100 °C, above 150 °C or above 175 °C. The determination by the control means can be assisted by one or more suitable sensor inputs indicative of a condition of the engine selected from the group consisting of: exhaust gas temperature, catalyst bed temperature, accelerator position, mass flow of exhaust gas in the system, manifold vacuum, ignition timing, engine speed, lambda value of the exhaust gas, the quantity of fuel injected in the engine, the position of the exhaust gas recirculation (EGR) valve and thereby the amount of EGR and boost pressure.

In a particular embodiment, metering is controlled in response to the quantity of nitrogen oxides in the exhaust gas determined either directly (using a suitable NOx sensor) or indirectly, such as using pre-correlated look-up tables or maps--stored in the control means--correlating any one or more of the abovementioned inputs indicative of a condition of the engine with predicted NOₓ content of the exhaust gas. The metering of the nitrogenous reductant can be arranged such that 60% to 200% of theoretical ammonia is present in exhaust gas entering the SCR catalyst calculated at 1:1 NH₃/NO and 4:3 NH₃/NO₂. The control means can comprise a pre-programmed processor such as an electronic control unit (ECU).

In a further embodiment, an oxidation catalyst for oxidizing nitrogen monoxide in the exhaust gas to nitrogen dioxide can be located upstream of a point of metering the nitrogenous reductant into the exhaust gas. In one embodiment, the oxidation catalyst is adapted to yield a gas stream entering the SCR zeolite catalyst having a ratio of NO to NO₂ of from about 4:1 to about 1:3 by volume, e.g. at an exhaust gas temperature at oxidation catalyst inlet of 250 °C to 450 °C. The oxidation catalyst can include at least one platinum group metal (or some combination of these), such as platinum, palladium, or rhodium, coated on a flow-through monolith substrate. In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

In a further embodiment, a suitable filter substrate is located between the oxidation catalyst and the zeolite catalyst. Filter substrates can be selected from any of those mentioned above, e.g. wall flow filters. Where the filter is catalyzed, e.g. with an oxidation catalyst of the kind discussed above, preferably the point of metering nitrogenous reductant is located between the filter and the zeolite catalyst. Alternatively, if the filter is uncatalyzed, the means for metering nitrogenous reductant can be located between the oxidation catalyst and the filter.

In a further embodiment, the zeolite catalyst for use in the present invention is coated on a filter located downstream of the oxidation catalyst. Where the filter includes the zeolite catalyst for use in the present invention, the point of metering the nitrogenous reductant is preferably located between the oxidation catalyst and the filter.

Disclsoed herein is a vehicular lean-burn engine comprising an exhaust system comprising the zeolite catalyst according to the present invention. The vehicular lean burn internal combustion engine can be a diesel engine, a lean-burn gasoline engine or an engine powered by liquid petroleum gas or natural gas.

### EXAMPLES

### Example:

An aluminosilicate having a CHA framework (isotype SSZ-13) having an SAR of 17 (zeolite A) and containing 2.4 weight percent of exchanged copper (based on total weight of zeolite) was impregnated with Ce nitrate using an incipient wetness technique and then washcoated on a substrate to produce a catalyst sample having 75 g/ft³ of Ce (1.35 weight percent Ce, based on total zeolite weight). The same technique was repeated to produced catalyst samples having the 96 g/ft³ of Ce, 119 g/ft³ of Ce, 188 g/ft³ of Ce, and 285 g/ft³ of Ce. Each of these samples was hydrothermally aged at 800 °C in 10% H₂O for five hours. These samples were then analyzed to determine their capacity for NOx conversion in an NH₃ SCR process at 200 °C and at 500 °C, wherein the NH₃ SCR process is tuned to allow 20 ppm ammonia slip. The results of this analysis are provided in Figure 1.

### Comparative Examples:

Zeolite A, without Ce impregnation, was analyzed to determine its capacity for NOx conversion in an NH₃ SCR process at 200 °C and at 500 °C, wherein the NH₃ SCR process is tuned to allow 20 ppm ammonia slip. The results of this analysis are provided in Figure 1.

An aluminosilicate having a CHA framework (isotype SSZ-13) having an SAR of 25 and containing 3.3 weight percent of exchanged copper (without Ce impregnation) was analyzed to determine its capacity for NOx conversion in an NH₃ SCR process at 200 °C and at 500 °C, wherein the NH₃ SCR process is tuned to allow 20 ppm ammonia slip. The results of this analysis are provided in Figure 1.

The results of these tests demonstrate that low SAR, copper-promoted zeolites that are impregnated with Ce have superior hydrothermal durability.

## Claims

1. A catalyst composition comprising:
a. a zeolite material having a small-pore framework having a maximum ring size of 8, wherein the zeolite has a CHA framework type, wherein the zeolite is SSZ-13, and a silica to alumina mole ratio (SAR) of 15 to 20;
b. 1.5 to 5 weight percent of an exchanged non-aluminum transition metal which is copper, based on the total weight of the zeolite; and
c. 1.35 to 13.5 weight percent of cerium, based on the total weight of the zeolite, wherein said cerium is present in a form selected from exchanged cerium ions, monomeric ceria, oligomeric ceria, and combinations thereof, provided that said oligomeric ceria has a particle size of less than 5 µm.

2. The catalyst of claim 1, wherein the composition comprises 2 to 3.5 weight percent exchanged copper, based on the total weight of the zeolite.

3. The catalyst of claim 2, wherein the composition comprises 2 to 2.5 weight percent exchanged copper, based on the total weight of the zeolite.

4. The catalyst of claim 1, wherein said copper is present in a Cu:Al atomic ratio of 0.17 to 0.24.

5. The catalyst of claim 1, wherein the composition comprises 2.7 to 8.1 weight percent of cerium, based on the total weight of the zeolite.

6. A method for the selective catalytic reduction (SCR) of NOx comprising contacting an exhaust gas produced by a lean-burn combustion engine with a catalyst according to any of claims 1 - 5 for a time sufficient to reduce the level of NOₓ in the gas.

## Patentansprüche

1. Katalysatorzusammensetzung, umfassend:
a. ein Zeolithmaterial, das ein kleinporiges Gerüst aufweist, das eine maximale Ringgröße von 8 aufweist, wobei der Zeolith einen CHA-Gerüsttyp, wobei der Zeolith SSZ-13 ist, und ein Molverhältnis von Siliciumdioxid zu-Aluminiumoxid (SAR) von 15 bis 20 aufweist;
b. zu 1,5 bis 5 Gewichtsprozent ein ausgetauschtes Nichtaluminiumübergangsmetall, das Kupfer ist, basierend auf dem Gesamtgewicht des Zeolithen; und
c. zu 1,35 bis 13,5 Gewichtsprozent Cer, basierend auf dem Gesamtgewicht des Zeolithen, wobei das Cer in einer Form vorliegt, die aus ausgetauschten Cer-Ionen, monomerem Cerdioxid, oligomerem Cerdioxid und Kombinationen davon ausgewählt ist, sofern das oligomere Cerdioxid eine Teilchengröße von weniger als 5 µm aufweist.

2. Katalysator nach Anspruch 1, wobei die Zusammensetzung zu 2 bis 3,5 Gewichtsprozent ausgetauschtes Kupfer umfasst, basierend auf dem Gesamtgewicht des Zeolithen.

3. Katalysator nach Anspruch 2, wobei die Zusammensetzung zu 2 bis 2,5 Gewichtsprozent ausgetauschtes Kupfer umfasst, basierend auf dem Gesamtgewicht des Zeolithen.

4. Katalysator nach Anspruch 1, wobei das Kupfer in einem Atomverhältnis Cu:Al von 0,17 bis 0,24 vorhanden ist.

5. Katalysator nach Anspruch 1, wobei die Zusammensetzung zu 2,7 bis 8,1 Gewichtsprozent Cer umfasst, basierend auf dem Gesamtgewicht des Zeolithen.

6. Verfahren für die selektive katalytische Reduktion (SCR) von NOx, umfassend ein Inkontaktbringen eines Abgases, das durch einen Magerverbrennungsmotor erzeugt wird, mit einem Katalysator nach einem der Ansprüche 1 bis 5 für eine Zeit, die ausreicht, um den Gehalt an NOₓ in dem Gas zu reduzieren.

## Revendications

1. Composition de catalyseur comprenant :
a. un matériau zéolitique ayant une structure à petits pores ayant une taille maximale de cycle de 8, la zéolite ayant un type de structure CHA, la zéolite étant SSZ-13, et un rapport molaire de la silice à l'alumine (SAR) de 15 à 20 ;
b. 1,5 à 5 pour cent en poids d'un métal de transition non aluminique échangé qui est du cuivre, en fonction du poids total de la zéolite ; et
c. 1,35 à 13,5 pour cent en poids de cérium, en fonction du poids total de la zéolite, ledit cérium étant présent sous une forme choisie parmi ions cérium échangés, oxyde de cérium monomère, oxyde de cérium oligomère, et combinaisons de ceux-ci, à condition que ledit oxyde de cérium oligomère ait une taille de particules inférieure à 5 µm.

2. Catalyseur selon la revendication 1, dans lequel la composition comprend 2 à 3,5 pour cent en poids de cuivre échangé, en fonction du poids total de la zéolite.

3. Catalyseur selon la revendication 2, dans lequel la composition comprend 2 à 2,5 pour cent en poids de cuivre échangé, en fonction du poids total de la zéolite.

4. Catalyseur selon la revendication 1, dans lequel ledit cuivre est présent dans un rapport atomique Cu:Al de 0,17 à 0,24.

5. Catalyseur selon la revendication 1, dans lequel la composition comprend 2,7 à 8,1 pour cent en poids de cérium échangé, en fonction du poids total de la zéolite.

6. Procédé destiné à la réduction catalytique sélective (SCR) de NOx comprenant la mise en contact d'un gaz d'échappement produit par un moteur à combustion à mélange pauvre avec un catalyseur selon l'une quelconque des revendications 1 à 5 pendant une période suffisante pour réduire le taux de NOₓ dans le gaz.
